# EUROPEAN PATENT SPECIFICATION

(11) **EP 2 199 633 B1**
(45) Date of publication and mention of the grant of the patent: **21.09.2011**
(21) Application number: 09179392.7
(22) Date of filing: 16.12.2009
(51) Int. Cl.: F16C 35/063, F16H 57/02

(54) **Input shaft support structure**
Antriebswellenträgerstruktur
Structure de support d'arbre d'entrée

(30) Priority: 18.12.2008 JP 2008322094
(43) Date of publication of application: 23.06.2010
(73) Proprietor: Toyota Jidosha Kabushiki Kaisha, Toyota-shi, Aichi 471-8571 (JP)
(72) Inventor: IKEDA, Akihiko, Toyota-shi Aichi 471-8571 (JP); SHIMANE, Yoshichika, Toyota-shi Aichi 471-8571 (JP); ISHIHARA, Tadashi, Toyota-shi Aichi 471-8571 (JP)
(74) Representative: TBK

(56) References cited:
- EP-A- 1 031 765
- EP-A- 1 517 070
- JP-A- 2008 183 934
- US-A1- 2004 121 878

## Description

### BACKGROUND OF THE INVENTION

### Field of the Invention

The present invention relates to a structure for supporting an input shaft that transmits the rotation of a crank shaft in a clutch connected state to a gear in a gear box.

### Related Art

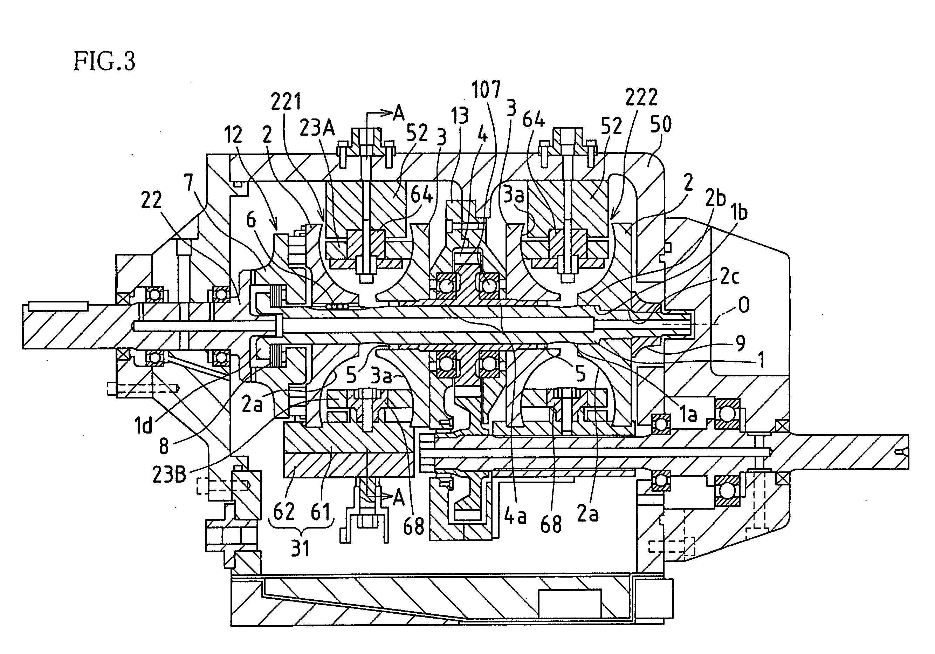

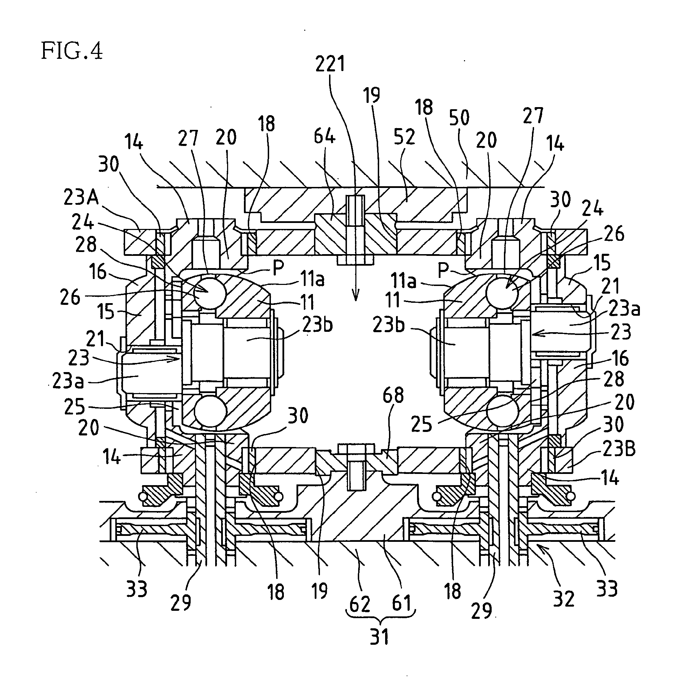

For example, a double-cavity toroidal continuously variable transmission used as an automotive transmission is configured as shown in FIGS. 3 and 4 (Conventional Example 1).

Specifically, as shown in FIG. 3, inside a casing 50, an input shaft 1 is rotatably supported, and two input-side disks 2 and two output-side disks 3 are attached to the outer circumference of the input shaft 1. Also, an output gear 4 is rotatably supported on the outer circumference of a middle portion of the input shaft 1. The output-side disks 3 are spline-coupled to a cylindrical flange portion 4a provided at a central portion of the output gear 4.

The input shaft 1 is rotationally-driven by a drive shaft 22 via a loading cam-type pressing apparatus 12 provided between a loading cam 7 and the input-side disk 2 located on the left side in FIG. 3. Also, the output gear 4 is supported, with interposition of angular bearings 107, against a partition wall 13 configured by the coupling of two members, and furthermore is supported in the casing 50 with interposition of the partition wall 13. Accordingly, the output gear 4 can rotate around a shaft line O of the input shaft 1, and displacement in the shaft line O direction is prevented.

Due to needle bearings 5 interposed between the output-side disks 3 and the input shaft 1, the output-side disks 3 are supported so as to be capable of rotating around the shaft line O of the input shaft 1. Also, the input-side disk 2 on the left side in FIG. 3 is supported against the input shaft 1 with interposition of a ball spline 6, and the input-side disk 2 on the right side in FIG. 3 is spline-coupled to the input shaft 1. These input-side disks 2 thus rotate along with the input shaft 1. Furthermore, power rollers 11 (see FIG. 4) are rotatably sandwiched between traction faces 2a of the input-side disks 2 and traction faces 3a of the output-side disks 3.

An inner circumferential face 2c of the input-side disk 2 located on the right side in FIG. 3 is provided with a stepped portion 2b, and a stepped portion 1b provided on an outer circumferential face 1a of the input shaft 1 is abutted against the stepped portion 2b. The back face (the right face in FIG. 3) of this input-side disk 2 is abutted against a loading nut 9 threaded onto a screw portion formed on the outer circumferential face of the input shaft 1. This therefore substantially prevents this input-side disk 2 from becoming displaced with respect to the input shaft 1 in the shaft line O direction. Also, disc springs 8 are provided between the loading cam 7 and collar portion 1d of the input shaft 1, and these disc springs 8 exert pressure on the area of contact between circumferential faces 11a (see FIG. 4) of the power rollers 11 and the traction faces 2a and 3a of the disks 2 and 3.

FIG. 4 is a cross-sectional diagram taken along line A-A in FIG. 3, and as shown in FIG. 4, pairs of yokes 23A and 23B are supported inside the casing 50 at positions next to the pairs of output-side disks 3, so as to sandwich both disks 3 from both sides. These pairs of yokes 23A and 23B are made from a metal such as copper that has been formed into a rectangular shape by pressing or forging. Also, in order to swingably support pivots 14 provided at both ends of later-described trunnions 15, circular support holes 18 are provided at the four corners of the yokes 23A and 23B, and also circular locking holes 19 are provided in a central portion of the yokes 23A and 23B in the width direction.

The pairs of yokes 23A and 23B are supported by spherical posts 64 and 68 formed on mutually opposing portions of the inner face of the casing 50, so as to be capable of a slight amount of displacement. These spherical posts 64 and 68 are provided respectively facing a first cavity 221 and a second cavity 222 (see FIG. 3) that are between the traction faces 2a of the input-side disks 2 and the traction faces 3a of the output-side disks 3.

Accordingly, in the state of being supported by the spherical posts 64 and 68, one end portion of the yokes 23A and 23B faces the outer circumferential portion of the first cavity 221, and the other end portion faces the outer circumferential portion of the second cavity 222.

Since the first cavity 221 and the second cavity 222 have the same structure, only the first cavity 221 is described below.

As shown in FIG. 4, inside the casing 50, a pair of trunnions 15 are provided in the first cavity 221. The pair of trunnions 15 swing around the pair of pivots 14 at positions skewed with respect to the input shaft 1. Note that a depiction of the input shaft 1 has been omitted from FIG. 4.

The main portion of each trunnion 15 is a support plate portion 16, and the ends of each support plate portion 16 in the lengthwise direction (the vertical direction in FIG. 4) have a pair of bent wall portions 20 formed so as to be bent toward the inner face of the support plate portions 16. Also, due to these bent wall portions 20, concave pocket portions P for accommodating the power rollers 11 are formed in the trunnions 15. Also, the pivots 14 are provided mutually concentrically on the outer faces of the bent wall portions 20.

A circular hole 21 is formed in the central portion of each support plate portion 16, and a base end portion 23a of a displacement shaft 23 is supported in each circular hole 21. Then, by causing the trunnions 15 to swing around the pivots 14, it is possible to adjust the tilt angle of the displacement shafts 23 supported at the central portion of the trunnions 15. Also, the power rollers 11 are rotatably supported on the perimeter of tip end portions 23b of the displacement shafts 23 that protrude from the inner face of the trunnions 15, and the power rollers 11 are sandwiched between the input-side disks 2 and the output-side disks 3. Note that the base end portions 23a and the tip end portions 23b of the displacement shafts 23 are eccentric with respect to each other.

Also, as described above, the pivots 14 of the trunnions 15 are each supported so as to be able to swingable with respect to the pairs of yokes 23A and 23B and so as to be able to be displaced in the axial direction (the vertical direction in FIG. 4), and the horizontal movement of the trunnions 15 is constrained by the yokes 23A and 23B. As described above, four circular support holes 18 are provided at the four corners of the yokes 23A and 23B, and the pivots 14 provided at the end portions of the trunnions 15 are respectively swingably supported in the support holes 18 with interposition of radial needle bearings 30. Also, as described above, the circular locking holes 19 are provided at the central portion of the yokes 23A and 23B in the width direction (the horizontal direction in FIG. 4), and the spherical posts 64 and 68 are fitted with inner circumferential faces of the locking holes 19. In other words, the upper yokes 23A are swingably supported by the spherical posts 64 that are supported against the casing 50 with interposition of fixing members 52, and the lower yokes 23B are swingably supported by the spherical posts 68 and an upper cylinder body 61 of a drive cylinder 31 that supports the spherical posts 68.

Note that the displacement shafts 23 provided on the trunnions 15 have been provided at positions on 180-degree opposite sides of the input shaft 1. Also, the directions in which the tip end portions 23b of the displacement shafts 23 are eccentric with respect to the base end portions 23a are the same directions as the rotation directions of the disks 2 and 3 (vertically opposite directions in FIG. 4). Also, the eccentricity direction is a direction substantially orthogonal to the arrangement direction of the input shaft 1.

Accordingly, the power rollers 11 are supported so as to be capable of being somewhat displaced in the lengthwise direction of the input shaft 1. As a result, even if the power rollers 11 tend to become displaced in the axial direction of the input shaft 1 arising from, for example, elastic deformation of the constituent members due to the thrust load generated by the pressing apparatus 12, unbearable force is not exerted on the constituent members, and such displacement is absorbed.

Also, thrust ball bearings 24 and thrust needle bearings 25 are provided between the outer face of the power rollers 11 and the inner face of the support plate portions 16 of the trunnions 15, in the stated order from the outer face of the power rollers 11. Of these, the thrust ball bearings 24 bear the thrust-direction load exerted on the power rollers 11, while allowing rotation of the power rollers 11. The thrust ball bearings 24 are each configured from a plurality of individual balls 26, an annular retainer 27 that rollably holds the balls 26, and an annular outer ring 28. Also, the inner ring track of the thrust ball bearings 24 is formed on the outer face of the power rollers 11, and the outer ring track of the thrust ball bearings 24 is formed on the inner face of the outer rings 28.

Also, the thrust needle bearings 25 are sandwiched between the inner face of the support plate portions 16 of the trunnions 15 and the outer face of the outer rings 28. Such thrust needle bearings 25 bear the thrust load exerted by the power rollers 11 on the outer rings 28, while allowing the power rollers 11 and the outer rings 28 to swing around the base end portions 23a of the displacement shafts 23.

Furthermore, drive rods (shaft portions extending from the pivots 14) 29 are provided at one end portion (the lower end portion in FIG. 4) of the trunnions 15, and drive pistons (hydraulic pistons) 33 are fixed to an outer circumferential face of the middle portion of the drive rods 29. Also, the drive pistons 33 are respectively oil-tightly fitted into a drive cylinder 31 configured by the upper cylinder body 61 and a lower cylinder body 62. These drive pistons 33 and the drive cylinder 31 constitute a driving apparatus 32 that displaces the trunnions 15 in the axial direction of the pivots 14 of the trunnions 15.

In the case of the toroidal continuously variable transmission configured in this way, the rotation of the drive shaft 22 is transmitted to the input-side disks 2 and the input shaft 1 via the pressing apparatus 12. Also, the rotation of the input-side disks 2 is transmitted to the output-side disks 3 via the pairs of power rollers 11, and the rotation of the output-side disks 3 is retrieved by the output gear 4.

In the case of changing the rotational speed ratio between the input shaft 1 and the output gear 4, the pairs of drive pistons 33 are displaced in mutually opposite directions. As the drive pistons 33 become displaced, the pairs of trunnions 15 become displaced in mutually opposite directions. For example, the power roller 11 on the left side in FIG. 4 becomes displaced to a lower position, and the power roller 11 on the right side in FIG. 4 becomes displaced to a higher position. As a result, there is a change in the direction of the tangential force acting on the area of contact between the circumferential face 11a of the power rollers 11 and the traction faces 2a and 3a of the input-side disks 2 and the output-side disks 3. Then, as the direction of the force changes, the trunnions 15 swing in mutually opposite directions around the pivots 14 pivoted in the yokes 23A and 23B.

As a result, the position of contact between the circumferential face 11a of the power rollers 11 and the traction faces 2a and 3a changes, and the rotational speed ratio between the input shaft 1 and the output gear 4 changes. Also, if the torque transmitted between the input shaft 1 and the output gear 4 fluctuates, and the amount of elastic deformation of the constituent members changes, the power rollers 11 and the outer rings 28 attached to the power rollers 11 slightly rotate around the base end portions 23a of the displacement shafts 23. Since the thrust needle bearings 25 exist between the outer face of the outer rings 28 and the inner face of the support plate portions 16 constituting the trunnions 15, the above rotation is smooth. Accordingly, only a small amount of force is required to change the tilt angle of the displacement shafts 23 as described above.

It should be noted that in the toroidal continuously variable transmission having the above configuration, generally the output-side disks 3 are in-low coupled with the output gear 4 by keys and splines (e.g., see JP H11-166605A, JP H11-280861A, JP H11-280862A, and JP H11-280863A), and as a result, the output-side disks 3 are supported against the casing 50 with interposition of the partition walls 13. On the other hand, the input-side disks 2 are supported against the input shaft 1, and the input shaft 1 is generally supported against the casing 50 with interposition of the output-side disks 3, the output gear 4, and the like, due to the bearings disposed at both ends and the center of the input shaft 1. In other words, the positional relationship between the output-side disks 3 and the input-side disks 2 is determined by the position of the input shaft 1 that supports the input-side disks 2. For this reason, in order to obtain a desired power transmission efficiency by accurately specifying the position of contact between the power rollers 11 and the disks 2 and 3, it is necessary to accurately specify the relative positions of the input shaft 1 and the output-side disks 3 by accurately determining the position of the input shaft 1 with respect to the casing 50, and thus accurately determine the position of the input-side disks 2 with respect to the output-side disks 3.

However, in a conventional support structure for the input shaft 1, determining well-balanced positions of the support system for the output-side disks 3 and the support system for the input-side disks 2 is difficult due to, for example, the positions of the bearings and the size of the gaps, and for this reason, it is difficult to accurately specify relative positions of the input shaft 1 and the output-side disks 3 by accurately determining the position of the input shaft 1 with respect to the casing 50.

Accordingly, due to falling of the output-side disks 3 (the output gear 4) and the input shaft 1 at the time of power transmission, the positions of contact with the power rollers 11 on the input-side disks 2 and the output-side disks 3 shift away from predetermined positions, and there is the risk of a decline in transmission efficiency and durability, or an increase in vibration.

In order to address this situation, JP 2007-292145A proposes a toroidal continuously variable transmission (Conventional Example 2) that enables accurately determining the position of the input shaft with respect to the casing, and thus can obtain a desired power transmission efficiency and durability by accurately specifying the positions of contact between the disks and the power rollers.

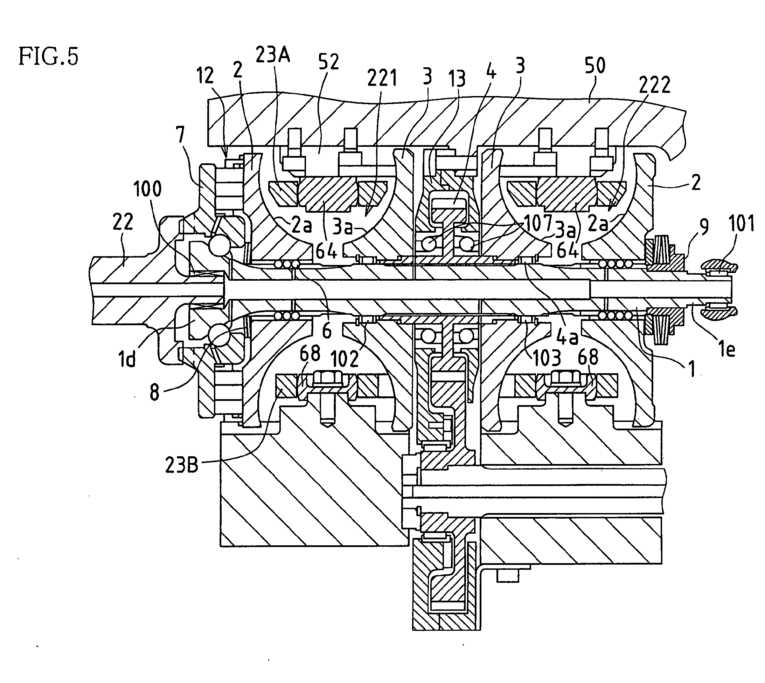

As shown in FIG. 5, in the toroidal continuously variable transmission proposed in JP 2007-292145A, the gap in the radial direction of a bearing 100 disposed at a first end portion 1d of the input shaft 1 is set the largest, and accordingly, the input shaft 1 is substantially supported at a second end portion 1e and the central portion, and not at the first end portion 1d to which rotational torque is inputted. In this case, the positions of the output-side disks 3 is determined by the partition walls 13, and the position of the input shaft 1 with respect to the casing 50 is determined by bearings 101, 102, and 103. Accordingly, it is possible to accurately determine the position of the input shaft 1 with respect to the casing 50. Note that in FIG. 5, the same reference signs have been given to parts that have the same functions as in FIGS. 3 and 4.

Normally, the input shaft that transmits the rotation of the crank shaft in the clutch connected state to the gear in the gear box is only supported at two points by two bearings disposed with a gap therebetween in the gear box, and bearings for supporting the input shaft inside the engine are not provided.

In a support structure for such an input shaft, if the input shaft is long or there is not input from the clutch there is an increase in interference between the clutch discs and the clutch cover and in the input of load in the radial direction on the bearings due to the flexure of the input shaft, and the durability life of the bearings declines. For this reason, in order to improve the durability, it has been necessary to increase the size of the bearings for supporting the input shaft in the gear box, or increase the diameter of the input shaft in order to control flexure.

In view of this, although it is possible to dispose a bearing inside the engine in addition to the two bearings inside the gear box, thus supporting the input shaft at three points with the three bearings, the bearings become pried away from each other due to tolerances in the manufacturing process, and a surplus load is generated.

In order to prevent this, it is possible to fit one of the three bearings loosely to the input shaft, but it is not currently clear which of the bearings is to be used to loosely support the input shaft.

It should be noted that although the input shaft 1 is supported at three points by the three bearings 101, 102, and 103 in the technology disclosed in JP 2007-292145A, there is no disclosure regarding which of the three bearings 101, 102, and 103 is to be loosely fitted to the input shaft 1.

The closest prior art document EP 1 031 765 A2 relates to a countershaft transmission comprising an input shaft, two bearings supporting the input shaft on one side and a clutch CL. The other end of the input shaft is supported on an engine output shaft by means of bearings.

### SUMMARY OF THE INVENTION

The present invention has been achieved in light of the above situation, and an object thereof is to provide an input shaft support structure that can, in the case of supporting an input shaft at three points with three bearings, prevent skew between the bearings.

In order to achieve the above object, an input shaft support structure according to the present invention is a structure for supporting an input shaft that transmits rotation of a crank shaft in a clutch connected state to one or more gear in a gear box, characterized in that a first end portion (one end portion) of the input shaft is rotatably supported against a case of the gear box with interposition of a first bearing and a second bearing that are disposed with a gap therebetween, a second end portion (other end portion) of the input shaft is rotatably supported against an inner circumferential face of an end portion of the crank shaft with interposition of a third bearing, and the third bearing is fitted to the input shaft more loosely than the first bearing and the second bearing.

Specifically, in the above input shaft support structure, an outer ring of the third bearing may be tightly fitted to the inner circumferential face of the end portion of the crank shaft, and an inner ring of the third bearing may be loosely fitted to an outer circumferential face of the second end portion of the input shaft.

Due to being provided on the inner circumferential face of the end portion of the crank shaft, the third bearing does not have a large outer circumference, and cannot bear a large load. In the present invention, the third bearing is fitted to the input shaft more loosely than the first bearing and second bearing, and therefore the input shaft is supported by the third bearing only when the input shaft has become flexed. This enables preventing skew between bearings while securing the durability of the third bearing.

Meanwhile, if rattling occurs inside the first bearing or the second bearing, or if the position of the first bearing or the second bearing becomes shifted with respect to the case of the gear box, the input shaft becomes tilted due to the transmission of torque from the gears. It is necessary to prevent a load from being input to the third bearing when the input shaft has become tilted in this way.

In view of this, in the above input shaft support structure, it is preferable that a radial clearance between the third bearing and the input shaft is set such that a load is not input to the third bearing when the input shaft has become tilted due to transmission of torque from the gears.

According to the present invention, it is possible to provide an input shaft support structure that can, in the case in which an input shaft is supported at three points by three bearings, prevent the occurrence of skew between the bearings.

### BRIEF DESCRIPTION OF THE DRAWINGS

FIG. 1 is a cross-sectional diagram showing a configuration of an input shaft support structure according to an embodiment of the present invention.
FIG. 2 is a diagram showing an enlarged view of portion X in FIG. 1.
FIG. 3 is a cross-sectional diagram showing an example of a specific configuration of a toroidal continuously variable transmission according to Conventional Example 1.
FIG. 4 is a cross-sectional diagram taken along line A-A in FIG. 3.
FIG. 5 is a cross-sectional diagram showing a relevant portion of a toroidal continuously variable transmission according to Conventional Example 2.

### DESCRIPTION OF THE PREFERRED EMBODIMENTS

Below is a detailed description of an embodiment of the present invention with reference to the attached drawings.

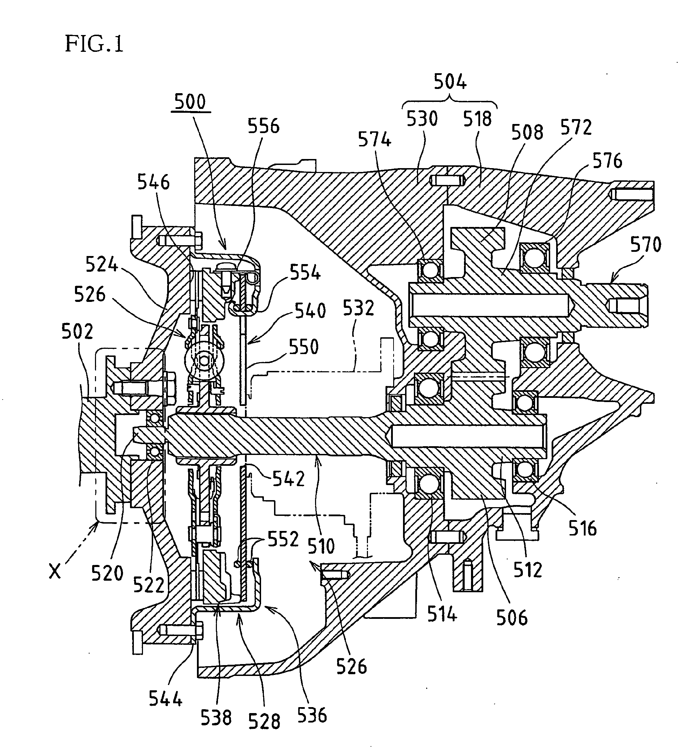

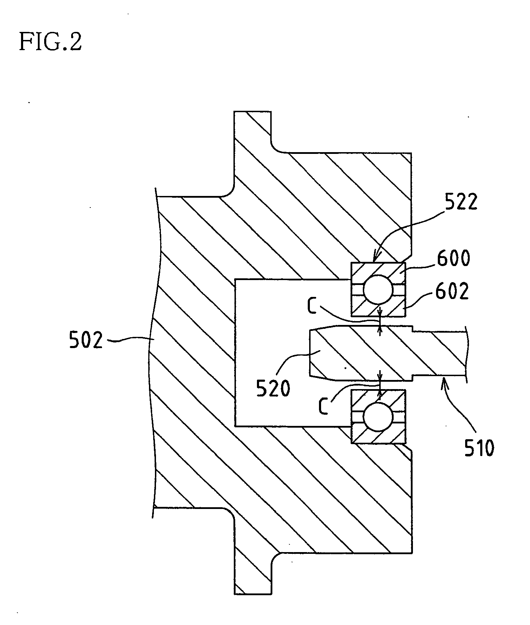

FIG. 1 is a cross-sectional diagram showing a configuration of an input shaft support structure according to the embodiment of the present invention, and FIG. 2 is a diagram showing an enlarged view of portion X in FIG. 1.

As shown in FIG. 1, the input shaft support structure of the present embodiment is for supporting an input shaft 510 that transmits the rotation of a crank shaft 502 while a clutch 500 is in a connected state to gears 506 and 508 in a gear box 504. One end portion (first end portion) 512 of the input shaft 510 is rotatably supported against a case (a concept including a rear case 518 and a front case 530) of the gear box 504 with interposition of a first bearing 514 and a second bearing 516 that are disposed with a gap therebetween, and the other end portion (second end portion) 520 of the input shaft 510 is rotatably supported against an inner circumferential face of an end portion of the crank shaft 502 with interposition of a third bearing 522.

The clutch 500 is a dry-type single plate friction clutch, and the clutch 500 mainly includes a flywheel 524, a clutch disc 526, a clutch cover assembly 528, and the like.

Note that the clutch 500 is concealed from the exterior by the front case 530 of the gear box 504, and can be caused to be in a connected or disconnected state by an operation mechanism that includes, for example, at least a slave cylinder 532 that functions as an actuator.

The flywheel 524 is fixed to the crank shaft 502 by bolts or the like.

The clutch disc 526 is, for example, spline-fitted to the other end portion 520 of the input shaft 510 in the gear box 504 so as to be disposed opposing the flywheel 524 in the axial direction, thus being attached so as to be capable of rotating integrally with the input shaft 510 and capable of displacement in the axial direction.

The clutch cover assembly 528 is for causing a friction plate on the outer diameter side of the clutch disc 526 to be in pressure-contact with the flywheel 524 (clutch connected state) when not subjected to an external operation (i.e., when the clutch pedal is not being pressed), and for causing the clutch disc 526 to be separated from the flywheel 524 (clutch disconnected state) when subjected to the external operation (i.e., when the clutch pedal is being pressed).

The clutch cover assembly 528 mainly includes a clutch cover 536, a pressure plate 538, a diaphragm spring 540, and the like.

The clutch cover 536 is saucer-shaped, a large-diameter circular hole 542 is provided in a bottom wall portion thereof, and flanges 544 that project outward in the radial direction are provided at several circumferential places on the outer circumference of the clutch cover 536. Curved raised portions 546 that are raised up toward the bottom wall portion are provided in the areas between the flanges 544. The flanges 544 at several circumferential places on the clutch cover 536 are engaged with the flywheel 524, and the engaged portions are respectively joined by a plurality of bolts.

The pressure plate 538 is supported inside the clutch cover 536 with interposition of a strap plate that is not shown, thus being capable of rotating integrally with the clutch cover 536 and capable of displacement in the axial direction.

The diaphragm spring 540 is supported against the clutch cover 536 and is also locked so as to be capable of being in connection with the pressure plate 538. This diaphragm spring 540 is conical in its natural state, and due to the formation of a slit 550 along the radial direction at several circumferential places on the inner diameter side, the diaphragm spring 540 is shaped as if having been provided with levers that project inward in the radial direction at several circumferential places on the inner diameter side.

The diaphragm spring 540 is attached to the clutch cover 536 with use of two pivot rings 552. Specifically, a plurality of bent claw portions 554 that are integrally formed at the several places on the circumference of the circular hole 542 in the clutch cover 536 have been inserted into the slits 550 of the diaphragm spring 540 on the base side, and the bent claw portions 554 and the diaphragm spring 540 are locked together by the pivot rings 552.

Also, the diaphragm spring 540 is locked to the pressure plate 538 with use of a retracting spring 556. The retracting spring 556 is fixed to the pressure plate 538 by a stud pin.

The clutch 500 configured as described above is driven by the slave cylinder 532. In the present embodiment, a CSC (Concentric Slave Cylinder) is employed as the slave cylinder 532. Note that a CSC has a conventionally known structure, and therefore a description of the internal structure thereof has been omitted.

The first gear 506 is provided integrally with the one end portion 512 of the input shaft 510 in the gear box 504, and the second gear 508 is provided integrally with an other end portion 572 of an output shaft 570 in the gear box 504. The first gears 506 and the second gear 508 are meshed together.

The other end portion 572 of the output shaft 570 is rotatably supported against the case of the gear box 504 with interposition of a fourth bearing 574 and a fifth bearing 576 that are disposed with a gap therebetween.

The gear box 504 is divided into the front case 530 and the rear case 518, which are fastened together by bolts.

The first bearing 514 and the second bearing 516, as well as the fourth bearing 574 and the fifth bearing 576 are ball bearings. The first bearing 514 and the second bearing 516 are provided so as to sandwich the first gear 506 in the horizontal direction, and the fourth bearing 574 and the fifth bearing 576 are provided so as to sandwich the second gear 508 in the horizontal direction.

As shown in FIG. 2, the third bearing 522 is a pilot ball bearing, and the third bearing 522 is to the input shaft 510 more loosely than the first bearing 514 and the second bearing 516. Specifically, an outer ring 600 of the third bearing 522 is tightly fitted to the inner circumferential face of the end portion of the crank shaft 502, and an inner ring 602 of the third bearing 522 is loosely fitted to an outer circumferential face of the other end portion 520 of the input shaft 510. A radial clearance C between the third bearing 522 and the other end portion 520 of the input shaft 510 is set such that a load is not input to the third bearing 522 when the input shaft 510 becomes tilted due to the transmission of torque by the gears 506 and 508 in the gear box 504.

In the above configuration, when the clutch 500 becomes connected due to the slave cylinder 532, the rotation of the crank shaft 502 is transmitted to the gears 506 and 508 in the gear box 504 via the input shaft 510, and accordingly, the output shaft 570 rotates in the same direction as the crank shaft 502.

Here, due to being provided on the inner circumferential face of the end portion of the crank shaft 502, the third bearing 522 does not have a large outer circumference and cannot bear a large load, but in the present embodiment, the third bearing 522 is fitted to the input shaft 510 more loosely than the first bearing 514 and the second bearing 516, and therefore the other end portion 520 of the input shaft 510 is supported by the third bearing 522 only when the input shaft 510 has become flexed. This enables preventing skew between the first bearing 514 and the second bearing 516 while securing the durability of the third bearing 522.

Also, the fourth bearing 574 and the fifth bearing 576 that support the output shaft 570 in the gear box 504 are ball bearings likewise to the first bearing 514 and the second bearing 516 that support the input shaft 510 in the gear box 504, and the first bearing 514 and the second bearing 516 are constrained in the radial direction. In view of this, in the present embodiment, the third bearing 522 that is a pilot ball bearing is disposed on the crank shaft 502 (engine) side, and radial-direction load from the clutch 500 directed toward the input shaft 510 is borne by this third bearing 522. For this reason, flexure of the input shaft 510 is suppressed, and the diameter of the input shaft 510 can be reduced. Also, since the load input to the first bearing 514 and the second bearing 516 is reduced, the size of the first bearing 514 and the second bearing 516 can be reduced.

Furthermore, in the present embodiment, the radial clearance C between the third bearing 522 and the other end portion 520 of the input shaft 510 is set such that a load is not input to the third bearing 522 when the input shaft 510 has become tilted due to the transmission of torque by the gears 506 and 508 in the gear box 504. Therefore, a load is not input to the third bearing 522 even if the input shaft 510 becomes tilted due to torque being transmitted by the gears 506 and 508 when rattling occurs inside the first bearing 514 or the second bearing 516 or the position of the first bearing 514 or the second bearing 516 becomes shifted with respect to the rear case 518 of the gear box 504. In other words, the third bearing 522 that the crank shaft 502 is necessarily provided with and that is constrained with respect to the outer diameter is only subjected to a load from the clutch 500, and therefore the durability of the third bearing 522 is secured.

Moreover, in the present embodiment, the one end portion 512 of the input shaft 510 is rotatably supported against the rear case 518 of the gear box 504 with interposition of the first bearing 514 and the second bearing 516, thereby enabling suppressing shifting of the positions of the first bearing 514 and the second bearing 516 and flexure of the input shaft 510, and securing favorable meshing between the gears 506 and 508. This is advantageous with respect to gear noise and the durability of the gears 506 and 508.

The present invention can be embodied in various other forms without departing from the gist or essential characteristics thereof. The embodiment described above is therefore considered in all respects as illustrative and not restrictive. The scope of the present invention is defined by the appended claims rather than by the foregoing description. Furthermore, all variations and modifications falling within the equivalency range of the appended claims are intended to be embraced therein.

This application claims priority on Patent Application No. 2008-322094 filed in Japan on December 12, 2008.

## Claims

1. An input shaft support structure for supporting an input shaft (510) that transmits rotation of a crank shaft (502) in a clutch (500) connected state to one or more gears (506, 508) in a gear box (504), wherein
a first end portion (512) of the input shaft (510) is rotatably supported against a case (518, 530) of the gear box (504) with interposition of a first bearing (514) and a second bearing (516) that are disposed with a gap therebetween, and
a second end portion (520) of the input shaft (510) is rotatably supported against an inner circumferential face of an end portion of the crank shaft (502) with interposition of a third bearing (522),
**characterized in that**
the third bearing (522) is fitted to the input shaft (510) more loosely than the first bearing (514) and the second bearing (516).

2. The input shaft support structure according to claim 1, wherein
an outer ring of the third bearing (522) is tightly fitted to the inner circumferential face of the end portion of the crank shaft (502), and an inner ring of the third bearing (522) is loosely fitted to an outer circumferential face of the second end portion (520) of the input shaft (510).

3. The input shaft support structure according to claim 1 or 2, wherein
a radial clearance between the third bearing (522) and the input shaft (510) is set such that a load is not input to the third bearing (522) when the input shaft (510) has become tilted due to transmission of torque from the gears (506, 508).

## Patentansprüche

1. Eingangswellenstützstruktur zum Stützen einer Eingangswelle (510), die eine Drehung einer Kurbelwelle (502) in einem mit einer Kupplung (500) verbundenen Zustand an ein oder mehr Zahnräder (506, 508) in einem Getriebe (504) überträgt, wobei
ein erster Endbereich (512) der Eingangswelle (510) drehbar gegen ein Gehäuse (518, 530) des Getriebes (504) unter Zwischenschaltung eines ersten Lagers (514) und eines zweiten Lagers (516) gestützt ist, die mit einem Spalt zwischen sich angeordnet sind, und wobei
ein zweiter Endbereich (520) der Eingangswelle (510) drehbar gegen eine innere Umfangsseite eines Endabschnitts der Kurbelwelle (502) unter Zwischenschaltung eines dritten Lagers (522) gestützt ist,
**dadurch gekennzeichnet, dass**
das dritte Lager (522) an der Eingangswelle (510) lockerer als das erste Lager (514) und das zweite Lager (516) montiert ist.

2. Eingangswellenstützstruktur nach Anspruch 1, wobei
ein Außenring des dritten Lagers (522) enganliegend an der inneren Umfangsseite des Endabschnitts der Kurbelwelle (502) montiert ist und ein Innenring des dritten Lagers (522) locker an einer äußeren Umfangsseite des zweiten Endabschnitts (520) der Eingangswelle (510) montiert ist.

3. Eingangswellenstützstruktur nach Anspruch 1 oder 2, wobei
ein radialer Spalt zwischen dem dritten Lager (522) und der Eingangswelle (510) so eingestellt ist, dass eine Last nicht an das dritte Lager (522) gegeben wird, wenn die Eingangswelle (510) aufgrund einer Momentübertragung von den Zahnrädern (506, 508) geneigt worden ist.

## Revendications

1. Structure de support d'un arbre d'entrée destinée à supporter un arbre d'entrée (510) qui transmet la rotation d'un vilebrequin (502) dans un état où un embrayage (500) est embrayé à un ou plusieurs engrenages (506, 508) dans une boîte à engrenages (504), où
une première partie (512) d'extrémité de l'arbre d'entrée (510) est supportée en rotation contre un carter (518, 530) de la boîte à engrenages (504) avec interposition d'un premier roulement (514) et d'un deuxième roulement (516) qui sont disposés avec un écart entre eux, et
une deuxième partie (520) d'extrémité de l'arbre d'entrée (510) est supportée en rotation contre une face circonférentielle intérieure d'une partie d'extrémité du vilebrequin (502) avec interposition d'un troisième roulement (522),
**caractérisée en ce que**
le troisième roulement (522) est ajusté à l'arbre d'entrée (510) de manière moins serrée que le premier roulement (514) et le deuxième roulement (516).

2. Structure de support d'un arbre d'entrée selon la revendication 1, dans laquelle
une bague extérieure du troisième roulement (522) est fermement ajustée à la face circonférentielle intérieure de la partie d'extrémité du vilebrequin (502), et une bague intérieure du troisième roulement (522) est ajustée sans serrage à une face circonférentielle extérieure de la deuxième partie d'extrémité (520) de l'arbre d'entrée (510).

3. Structure de support d'un arbre d'entrée selon la revendication 1 ou 2, dans laquelle
un jeu radial entre le troisième roulement (522) et l'arbre d'entrée ( 510 ) est réglé de sorte que le troisième roulement (522) ne reçoit pas de charge lorsque l'arbre d'entrée (510) s'incline suite à une transmission de couple à partir des engrenages (506, 508).
